(19) **Europäisches Patentamt / European Patent Office / Office européen des brevets**

(11) **EP 4 482 196 A1**

(12) **EUROPEAN PATENT APPLICATION**

(43) Date of publication:
**25.12.2024 Bulletin 2024/52**

(21) Application number: **24157015.9**

(22) Date of filing: **12.02.2024**

(51) International Patent Classification (IPC):
*H04W 24/02* (2009.01)

(52) Cooperative Patent Classification (CPC):
**H04W 24/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.06.2023 JP 2023099852**

(71) Applicant: **Kabushiki Kaisha Toshiba
Tokyo 105-0023 (JP)**

(72) Inventors:
• **GOTO, Hayato**
  **Tokyo (JP)**
• **OBATA, Haruka**
  **Tokyo (JP)**
• **NABETANI, Toshihisa**
  **TOKYO (JP)**
• **TATSUMURA, Kosuke**
  **Tokyo (JP)**

(74) Representative: **Marks & Clerk LLP
15 Fetter Lane
London EC4A 1BW (GB)**

(54) **INFORMATION PROCESSING DEVICE AND COMMUNICATION SYSTEM**

(57) According to one embodiment, an information processing device includes an acquisition part and a processor. The acquisition part is configured to acquire input information related to a plurality of target devices. The processor is configured to perform first processing and second processing. In the first processing, the processor derives a first solution of a problem determined according to the input information. In the second processing, the processor derives output information by using the first solution, and a plurality of scores calculated from the first solution and second information.

## FIG. 1

EP 4 482 196 A1

**Description**

<u>FIELD</u>

Embodiments described herein relate generally to an information processing device and a communication system.

<u>BACKGROUND</u>

An optimization problem or the like is solved by an information processing device such as a calculating device or the like. It is desirable to speed up an information processing device utilized in a communication system or the like.

<u>BRIEF DESCRIPTION OF THE DRAWINGS</u>

FIG. 1 is a flowchart illustrating an operation of an information processing device according to a first embodiment;
FIG. 2 is a schematic view illustrating the information processing device according to the first embodiment;
FIG. 3 is a flowchart illustrating an operation of the information processing device according to the first embodiment;
FIG. 4 is a flowchart illustrating an operation of the information processing device according to the first embodiment;
FIG. 5 is a flowchart illustrating an operation of the information processing device according to the first embodiment;
FIG. 6 is a schematic view illustrating an application of the information processing device according to the first embodiment;
FIG. 7 is a schematic view illustrating an information processing device according to the first embodiment;
FIG. 8 is a schematic view illustrating a communication system according to a second embodiment;
FIG. 9 is a schematic view illustrating a communication system according to the second embodiment;
FIG. 10 is a schematic view illustrating a communication system according to the second embodiment;
FIG. 11 is a graph illustrating the calculation result of the information processing device according to the first embodiment; and
FIG. 12 is a graph illustrating calculation results of the information processing device.

<u>DETAILED DESCRIPTION</u>

According to one embodiment, an information processing device includes an acquisition part and a processor. The acquisition part is configured to acquire input information related to a plurality of target devices. The processor is configured to perform first processing and second processing. In the first processing, the processor derives a first solution of a problem determined according to the input information. In the second processing, the processor derives output information by using the first solution, and a plurality of scores calculated from the first solution and second information.

Various embodiments are described below with reference to the accompanying drawings.

In the specification and drawings, components similar to those described previously in an antecedent drawing are marked with like reference numerals, and a detailed description is omitted as appropriate.

First embodiment

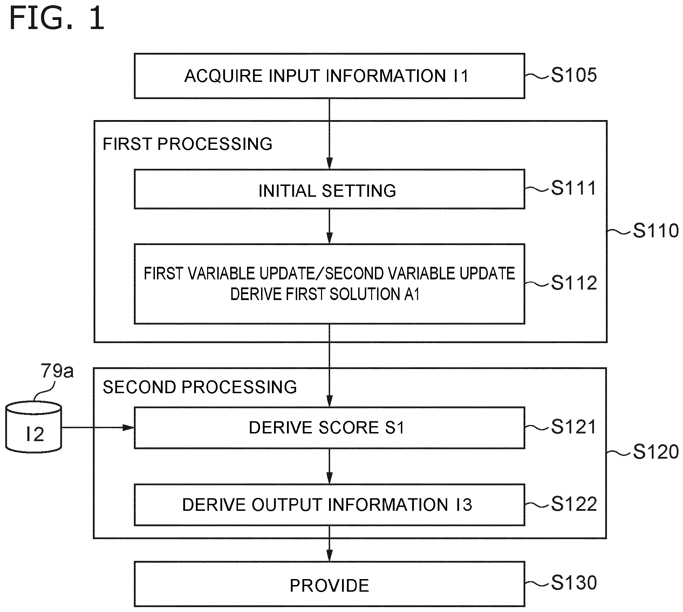

FIG. 1 is a flowchart illustrating an operation of an information processing device according to a first embodiment.

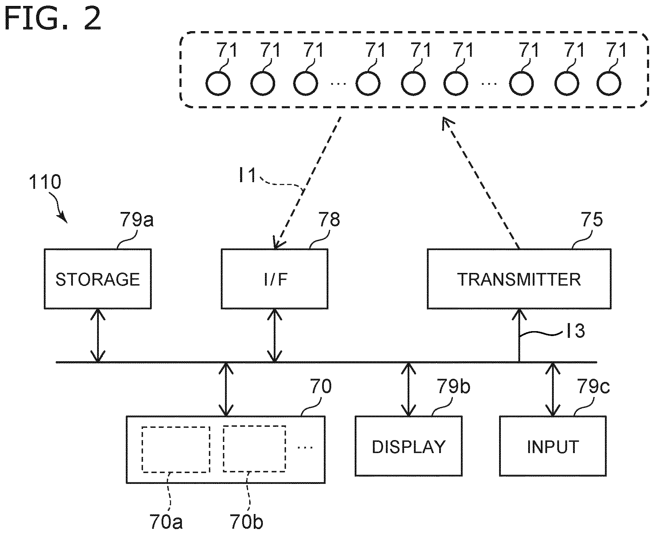

FIG. 2 is a schematic view illustrating the information processing device according to the first embodiment.

As shown in FIG. 2, the information processing device 110 according to the embodiment includes a processor 70 and an acquisition part 78. The information processing device 110 may be, for example, a calculating device.

The acquisition part 78 is configured to acquire input information I1 related to multiple target devices 71. The multiple target devices 71 may be, for example, multiple communication devices. The multiple target devices 71 may be, for example, multiple terminals. The multiple target devices 71 may be, for example, multiple mobile objects (e.g., vehicles or the like), multiple robots, multiple computers, etc.

For example, the acquisition part 78 is configured to acquire various data. The acquisition part 78 may include, for example, an I/O port, etc. The acquisition part 78 is an interface. The acquisition part 78 may include the function of an output part. The acquisition part 78 may include, for example, a communication function.

The processor 70 is configured to perform processing related to the input information I1 acquired by the acquisition part 78.

The processor 70 may include, for example, a CPU (Central Processing Unit), etc. The processor 70 includes, for example, an electronic circuit, etc. The information processing device 110 may be a calculation system.

In the example, the information processing device 110 includes storage 79a. The storage 79a is configured to store various data. The storage 79a may be, for example, memory. The storage 79a may include at least one of ROM (Read Only Memory) or RAM (Random Access Memory).

The information processing device 110 may include a display 79b, an input part 79c, etc. The display 79b may include various display devices. The input part 79c includes, for example, a device (e.g., a keyboard, a mouse, a touch input panel, a voice recognition input device, etc.) that includes an operation function.

Multiple components that are included in the information processing device 110 can communicate with one another by at least one of wired or wireless methods. The locations at which the multiple components included in the information processing device 110 are located may be different from one another. For example, a general-purpose computer may be used as the information processing device 110. For example, multiple computers that are connected to one another may be used as the information processing device 110. A special-purpose circuit may be used as at least a part of the information processing device 110 (e.g., the processor 70, etc.). For example, multiple circuits that are connected to one another may be used as the information processing device 110.

As shown in FIG. 2, the processor 70 may include multiple processing parts (e.g., a first processing part 70a, a second processing part 70b, etc.). The multiple processing parts may operate in parallel. For example, parallel processing (parallel computation) may be performed.

Examples of operations performed by the information processing device 110 according to the embodiment will now be described. FIG. 1 illustrates an operation performed by the information processing device 110.

As shown in FIG. 1, the acquisition part 78 acquires the input information I1 related to the multiple target devices 71 (step S105).

The processor 70 is configured to perform first processing (step S110) and second processing (step S120).

In the first processing, the processor 70 derives a solution (a first solution A1) of a problem determined according to the input information I1 (step S112). The processor 70 may perform initial settings (step S111) before step S112 as necessary.

In the second processing, the processor 70 calculates multiple scores S1 (e.g., features) from the first solution A1 and second information I2 (step S121). In the second processing, the processor 70 derives output information I3 by a calculation using the multiple scores S1 (step S122). The multiple scores S1 are multiple features related to the first solution A1. The second information I2 includes, for example, information related to the definition of the multiple scores S1.

As shown in FIG. 1, the derived output information I3 is provided to an external device (step S130). For example, the output information I3 may be provided via an interface (the acquisition part 78), etc. The output information I3 may be provided by a transmitter 75 (see FIG. 2). The transmitter 75 may be included in the information processing device 110.

In the information processing device 110 according to the embodiment as described above, for example, the processor 70 solves the optimization problem in two steps. In a first step (first processing), the processor 70 solves the optimization problem with relaxed conditions. The first solution A1 is obtained thereby. In a second step (second processing), the processor 70 calculates the multiple scores S1 based on the first solution A1 obtained in the first step and the second information I2, and derives the final solution (the output information I3) by a calculation using the obtained multiple scores S1. As a result, an optimization problem with complex conditions can be solved quickly. An optimization problem with complex conditions can be solved with high accuracy. According to the embodiment, an information processing device can be provided in which speedup is possible.

The problem to be solved by the information processing device 110 according to the embodiment is an optimization problem determined according to the input information I1. In the first processing, the processor 70 derives the solution (the first solution A1) of the relaxed optimization problem. The second information I2 related to the definition of the multiple scores S1 is used in the second processing. For example, the second information I2 is stored in the storage 79a. In such a case, the processor 70 is configured to acquire the second information I2 from the storage 79a and perform the second processing.

For example, the second information I2 may be stored in a storage device located separately from the information processing device 110. The processor 70 may acquire the second information I2 by any wireless or wired method. The storage 79a may be located at a different location from the processor 70.

According to the embodiment, a highly accurate solution is quickly obtained by the two-step processing. In one example, the multiple target devices 71 may be multiple communication devices. The multiple communication devices may be, for example, multiple portable terminals, etc. In the example, the input information I1 includes, for example, multiple transmission information amounts and multiple transmission efficiencies. One of the multiple transmission information amounts includes the information amount of the transmission of one of the multiple communication devices. For example, the multiple communication devices respectively utilize multiple frequency channels. One of the multiple transmission efficiencies corresponds to the transmission quality of one of the multiple communication devices utilizing one of the multiple frequency channels. For example, one of the multiple communication devices may utilize two or more of the multiple frequency channels.

In the first processing of such an example, the processor 70 determines, as the first solution A1, one or multiple frequency channels and transmission durations utilized by each of the multiple communication devices by considering the transmission information amounts and transmission efficiencies of the multiple communication devices. The transmission duration corresponds to the difference between the start time of the transmission and the end time of the transmission. In the first processing, for example, the processor 70 does not consider the start times of the transmissions of the multiple communication devices.

On the other hand, for example, in the second processing of the example, the processor 70 calculates the frequency channels utilized by the multiple communication devices, the transmission durations of the multiple communication devices, and the multiple scores S1 (the features) determined in the second information I2. The second information I2 is related to the definition of the multiple scores S1. The processor 70 determines the start time of the transmission of each of the multiple communication devices by a calculation using the calculated multiple scores S1. The frequency channels utilized by the multiple communication devices and the transmission durations of the multiple communication devices are determined by the first solution A1 obtained by the first processing. The output information I3 includes one or multiple frequency channels to be used in the transmission of each of the multiple communication devices, and the transmission time of each of the multiple communication devices. The output information I3 may include the start time of the transmission and the end time of the transmission. By two such steps, a complex optimization problem can be solved quickly with high accuracy.

According to the embodiment, the input information I1 includes the transmission information amount and the transmission efficiency. For example, the input information I1 may not include information related to the time. For example, the input information I1 does not include the transmission times of the multiple communication devices. The times and frequency channels are calculated based on the transmission information amounts and transmission efficiencies included in the input information I1. The first solution A1 that is obtained as a result of the first processing does not include the transmission times of the multiple communication devices. The transmission times are derived as the output information I3 as a result of the second processing. Thus, in the example, the processor 70 is configured to determine the start times of the transmissions and the end times of the transmissions of the multiple communication devices in the second processing.

Thus, according to the embodiment, the communication includes wireless communication. For example, the transmission includes wireless transmission. The processing according to the embodiment described above is effective when many communication devices wirelessly transmit and receive large amounts of information. According to the embodiment, the second information I2 includes multiple definitions of the multiple scores S1 determined based on statistical information obtained in advance for the multiple scores S1. By using the second information I2, a highly-accurate solution is quickly obtained. Thus, the problem that is determined according to the input information I1 and solved by the first processing does not include at least one condition (a first condition). The second information I2 includes information that is useful for the condition (the first condition). The useful information includes information useful for efficiently performing the calculation for determining the time. In the example above, the first condition is a condition related to the transmission times of the multiple communication devices. The transmission end time is determined from the transmission start time and the transmission duration determined in the first processing.

In the first processing of the embodiment, by repeatedly performing the first and second variable updates, the optimization solution (the first solution A1) for the problem excluding the first condition is quickly obtained with high accuracy.

An example of the first processing will now be described. The input information I1 includes, for example, a transmission information amount set $\{P\}$ related to the multiple communication devices, and a transmission efficiency set $\{Q\}$ of the frequency channels related to the multiple communication devices.

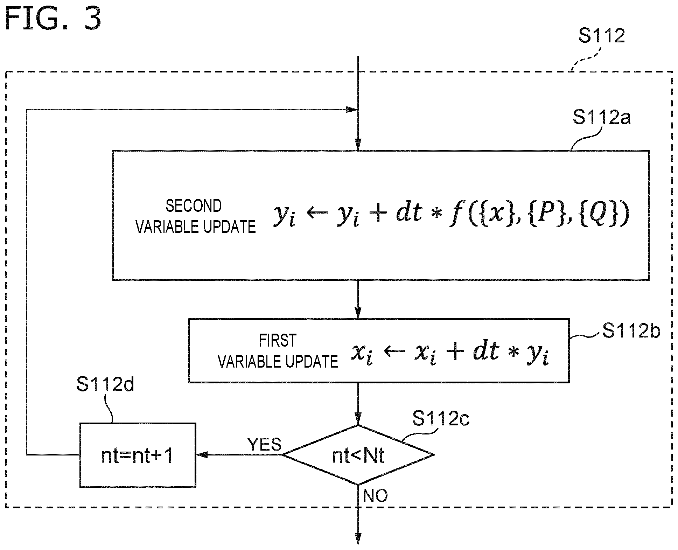

FIG. 3 is a flowchart illustrating an operation of the information processing device according to the first embodiment.

FIG. 3 shows one example related to step S112 of the first processing. As shown in FIG. 3, the processor 70 is configured to repeatedly perform the first variable update of updating the first variable set (step S112b) and the second variable update of updating the second variable set (step S112a) in the first processing. For example, the first variable update and the second variable update are alternately performed. As described below, the order of performing the first variable update and performing the second variable update may be arbitrary.

The first variable set $\{x\}$ includes multiple first variables. The multiple first variables include, for example, a first variable $x_i$. "$i$" is an integer not less than 1 and not more than $N$. $N$ is an integer not less than 2. The first variable set $\{x\}$ determines one or multiple channels utilized by each of the multiple communication devices. The second variable set $\{y\}$ includes multiple second variables. The multiple second variables include, for example, a second variable $y_i$. The transmission information amount set $\{P\}$ includes $P_u$. The transmission efficiency set $\{Q\}$ includes $Q_{u,k}$. "$u$" is an integer not less than 1 and not more than $U$. "$U$" is an integer not less than 1. "$k$" is an integer not less than 1 and not more than $K$. "$K$" is an integer not less than 2.

In the second variable update, the processor 70 updates the second variable set $\{y\}$ by using the function $f$ including the problem parameter set $\{J\}$ and the first variable set $\{x\}$. In the first variable update, the processor 70 updates the first variable set {x} by using the second variable set {y} updated in the second variable update. Here, for example, the function *f* is related to the objective function of the relaxed optimization problem to be solved in the first processing. For example, the function *f* is related to the change amount of the objective function accompanying the change of a determination variable. The determination variable, which is an argument of the objective function, corresponds to bits that determine the one or multiple channels utilized by each of the multiple communication devices.

In the second variable update, the processing of the following first formula is performed.

$$y_i \leftarrow y_i + dt * f(\{x\}, \{P\}, \{Q\}) \quad \ldots (1)$$

In the first formula, *"dt"* is a constant parameter.

In the first variable update, the processing of the following second formula is performed.

$$x_i \leftarrow x_i + dt * y_i \quad \ldots (2)$$

In the first variable update as shown in the second formula, the processor 70 updates the first variable set {x} by using the second variable set {y} updated in the second variable update. In the second formula, *"dt"* is a constant parameter.

In the example of FIG. 3, an iteration number *nt* is compared with a determined value *Nt* (step S112c) after step S112a and step S112b. When the iteration number *nt* is less than the determined value *Nt,* the iteration number *nt* is incremented (step S112d), and then the flow returns to step S112a. When the iteration number *nt* is not less than the determined value *Nt,* step S112 ends. Then, the flow proceeds to the second processing.

Thus, high accuracy is obtained by repeatedly performing such first and second variable updates.

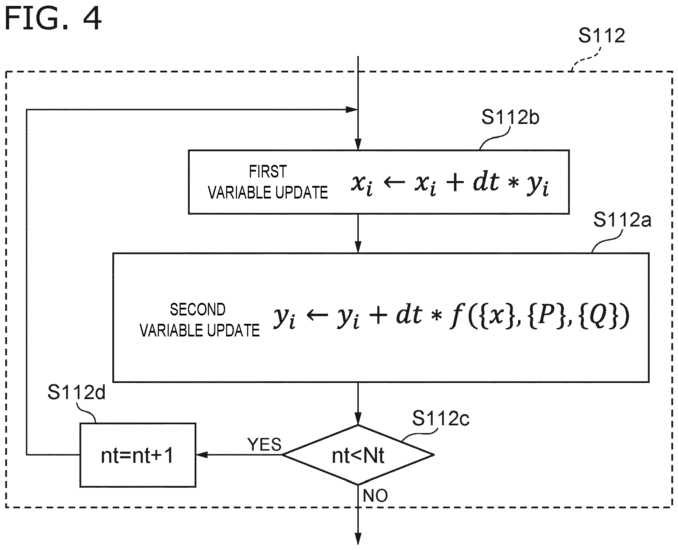

FIG. 4 is a flowchart illustrating an operation of the information processing device according to the first embodiment.

As shown in FIG. 4, the first variable update (step S112b) is performed before the second variable update (step S112a) in one iteration of the first and second variable updates. In the example, a solution with high accuracy is obtained.

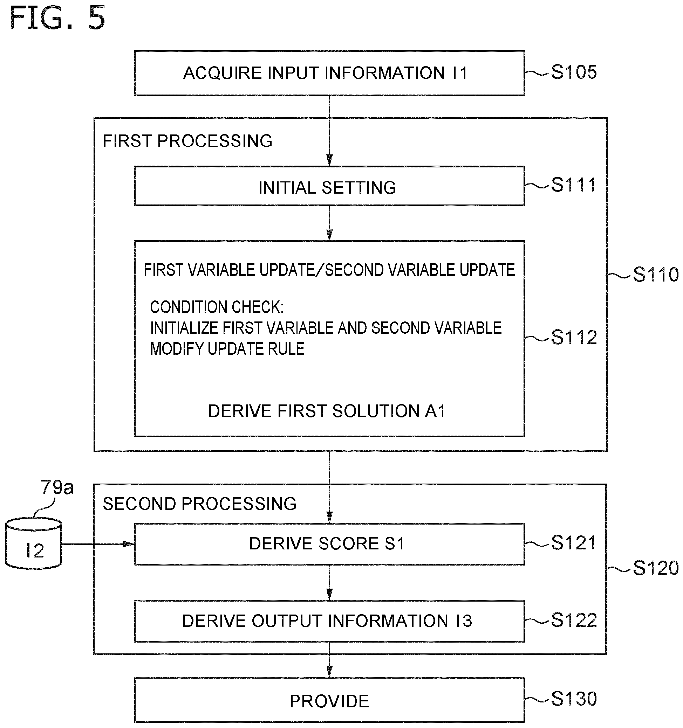

FIG. 5 is a flowchart illustrating an operation of the information processing device according to the first embodiment.

In an iteration (step S112) of the first and second variable updates as shown in FIG. 5, for example, the processor 70 may check a condition related to the first variable. When the condition related to the first variable is satisfied, the processor 70 may appropriately initialize the first and second variables. When the condition related to the first variable is satisfied, the processor 70 may appropriately modify the definition of the function *f* by using the second variable update. Thus, processor 70 may modify the update rules in an iteration of the first and second variable updates. A more accurate solution is easily obtained.

At least a part of the first processing described above may be performed in parallel. For example, the processor 70 may be configured to update a part of the second variable set {y} and another part of the second variable set {y} in parallel in the second variable update. As described above, the processor 70 may include the first processing part 70a and the second processing part 70b. The first processing part 70a may be configured to update a part of the second variable set {y} in the second variable update. The second processing part 70b may be configured to update another part of the second variable set {y} in the second variable update. At least a part of the operation of the first processing part 70a may be performed in parallel (simultaneously) with at least a part of the operation of the second processing part 70b.

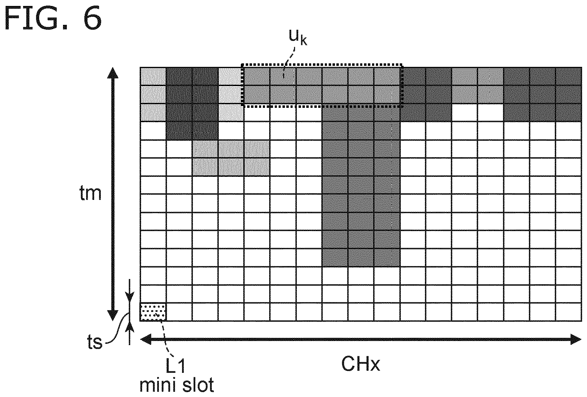

FIG. 6 is a schematic view illustrating an application of the information processing device according to the first embodiment.

In the example, the multiple target devices 71 are multiple communication devices. The multiple communication devices (e.g., users) correspond to multiple users {u}. *"u"* is an integer not less than 1 and not more than *U*. *"U"* is an integer not less than 1. FIG. 6 illustrates a scheduling unit called one slot. In FIG. 6, the horizontal axis is frequency channels CHx. The vertical axis is time. A duration tm of one slot is, for example, 0.5 ms. In the example, one slot includes fourteen communication blocks L1. The communication block L1 is the minimum unit of the allocation. The communication block L1 has one frequency channel CHx and one duration ts. One duration ts is, for example, (0.5/14) ms. Each of the multiple users $u_k$ includes one, two, or more communication blocks L1. Generally, the information amounts to be transmitted by the multiple users $u_k$ are different from one another. There may be cases where the information amounts to be transmitted by the multiple users $u_k$ are equal.

For example, generally, the transmission quality (e.g., the transmission efficiency) is different between the multiple frequency channels CHx. Generally, the transmission quality (e.g., the transmission efficiency) also is different between the multiple users $u_k$. When the transmission information amount and the transmission quality are determined, the necessary number of communication blocks can be calculated. The necessary number of communication blocks is reduced when allocated to a frequency channel having good transmission quality. For example, for any of the multiple users $u_k$, the start times and end times of the communications are uniform when multiple frequency channels CHx are used. That is, for any of the multiple users, the number of communication blocks used by each of the channels used is the same. Furthermore, for any of the multiple users, the communication start times are the same. Such complex constraint conditions are set. The input information I1 includes some of such complex constraint conditions. There may be cases where the transmission quality (e.g., the transmission efficiency) is the same between multiple frequency channels CHx. There may be cases where the transmission quality (e.g., the transmission efficiency) is the same between multiple users $u_k$.

For example, in the first processing, the processor solves a problem having relaxed constraints. For example, only frequency channels CHx used by the multiple users $u_k$ are considered. For example, states are represented by bits for only the frequency channels CHx used by the multiple users $u_k$. The bit value that minimizes the area under the following optimization conditions is determined by the first processing.

For example, the optimization conditions include the use of a sufficient number of communication blocks L1 for the information amount to be transmitted by each of the multiple users $u_k$. For example, the optimization condition includes the number of the communication blocks L1 used being the same between the frequency channels CHx for any of the multiple users $u_k$. For example, in the optimization conditions, the maximum value (e.g., 12 or the like) determined by the sum of the number of the communication blocks L1 used by the multiple users $u_k$ is not exceeded in any of the frequency channels CHx. Conditions that minimize the area under such optimization conditions are determined by the first processing. The area in each of the multiple frequency channels CHx is the sum of the number of the communication blocks L1 before the final communication block L1 used.

The first solution A1 is obtained by performing the first processing under optimization conditions such as those described above. Subsequently, in the second processing, the processor 70 derives the output information I3 by a calculation using the multiple scores S1 based on the first solution A1 and the second information I2. For example, the multiple scores S1 are defined by the number of the communication blocks L1 related to the multiple users $u_k$ and the frequency channels CHx used by the multiple users $u_k$, as determined by the first solution A1. The second information I2 includes the definitions of various multiple scores S1 determined by prior investigations. By using such second information I2, the start times of the transmissions of the multiple users $u_k$ are determined as the output information I3. By employing two such steps, a result is quickly obtained with high accuracy.

The multiple scores S1 are respectively given to the multiple users[$u$] (the $u$th user of the multiple users $\{u\}$). One of the multiple scores S1 corresponds to one of the multiple users $\{u\}$. Another one of the multiple scores S1 corresponds to another one of the multiple users $\{u\}$. One of the multiple scores S1 may be different from another one of the multiple scores S1. In one example, the following third formula is applicable as the definition of the multiple scores S1.

$$S1[u]=n1*Block[u]+n2*Ch[u] \quad if \ Block[u]<=n5$$

$$S1[u]=n3*Block[u]+n4*Ch[u] \ otherwise \qquad \cdots (3)$$

In the third formula, Block[$u$] is the number of the communication blocks L1 corresponding to the transmission duration of the user[$u$]. Ch[$u$] is the number of channels used by the user[$u$]. Block[$u$] and Ch[$u$] are determined by the first solution A1 obtained in the first processing. The values $n1, n2, n3, n4,$ and $n5$ are integers. The second information I2 corresponds to these values. Different definitions of the multiple scores S1 are represented by these values.

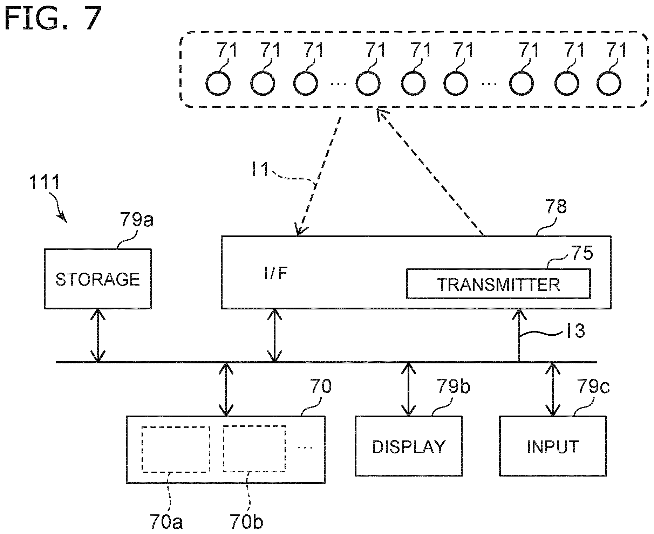

FIG. 7 is a schematic view illustrating an information processing device according to the first embodiment.

In the information processing device 111 according to the embodiment as shown in FIG. 7, the transmitter 75 may be included in the acquisition part 78 (e.g., an I/O port or an interface). Otherwise, the configuration of the information processing device 111 may be similar to the configuration of the information processing device 110.

Second embodiment

A second embodiment relates to a communication system. The communication system according to the embodiment includes at least a part of the information processing device 110 according to the first embodiment.

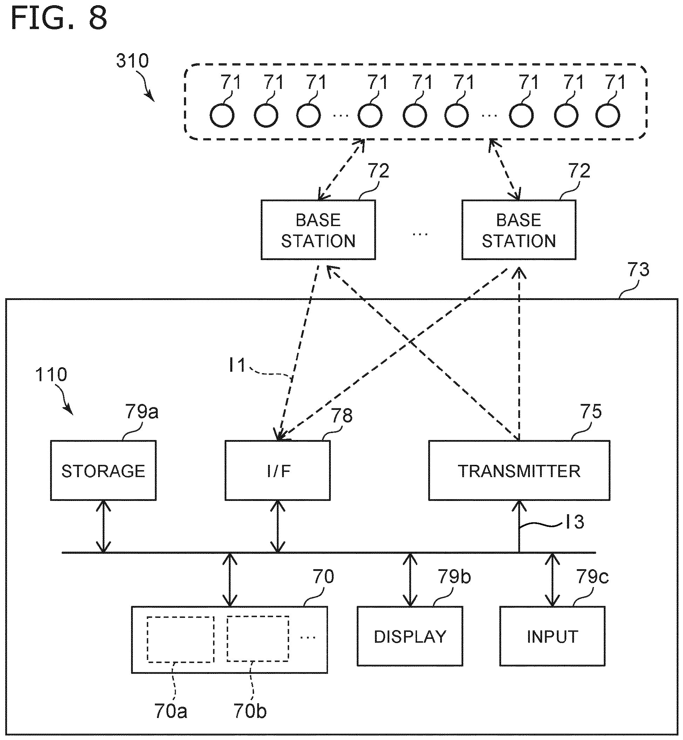

FIG. 8 is a schematic view illustrating the communication system according to the second embodiment.

As shown in FIG. 8, the communication system 310 according to the embodiment includes a controller 73 and a base station 72. The communication system 310 may include the multiple base stations 72. The controller 73 includes the information processing device 110 according to the first embodiment. The controller 73 is, for example, an allocation determining device.

The base station 72 is configured to acquire the input information I1 from at least a part of the multiple target devices 71 (the multiple communication devices) and supply the input information I1 to the information processing device 110. The controller 73 is configured to receive an allocation request from the base station 72. The information processing device 110 is configured to determine the resources (the allocated resources) used in the communications of the multiple target devices 71. The allocated resource includes, for example, the frequency channel CHx. The allocated resource may include, for example, the communication start times related to the multiple target devices 71 (the multiple communication devices), etc. The controller 73 is configured to transmit the allocated resources to the base station 72. The base station 72 is configured to communicate with the multiple target devices 71 by using the allocated resources. The base station 72 communicates with the multiple target devices 71 (the multiple communication devices) in accordance with a communication standard. According to the embodiment, a communication system can be provided in which high-speed control is possible.

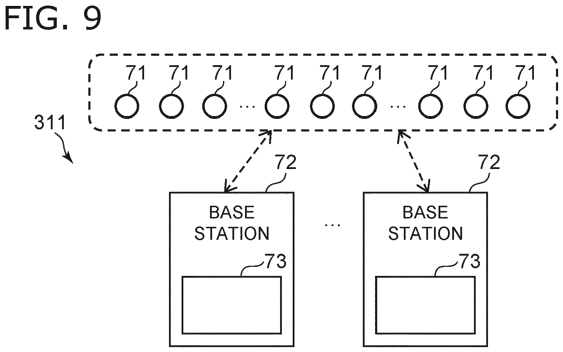

FIG. 9 is a schematic view illustrating a communication system according to the second embodiment. In the communication system 311 according to the embodiment as shown in FIG. 9, the controller 73 may be located in at least one of the multiple base stations 72. Multiple controllers 73 may be included. For example, one of the multiple controllers 73 is located in one of the multiple base stations 72. Another one of the multiple controllers 73 is located in another one of the multiple base stations 72.

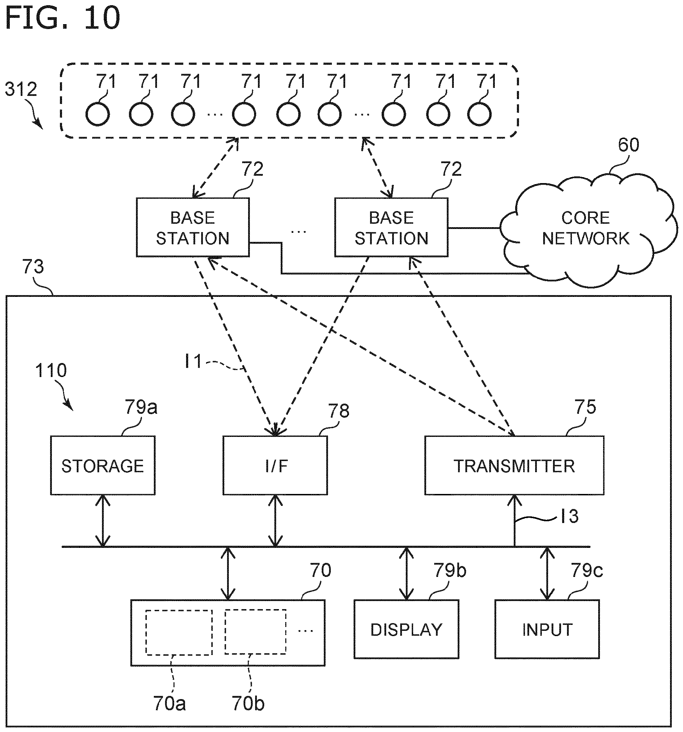

FIG. 10 is a schematic view illustrating a communication system according to the second embodiment.

In the communication system 312 according to the embodiment as shown in FIG. 10, the multiple base stations 72 may be configured to communicate via a core network 60. The controller 73 may be located in the core network 60.

According to the embodiment, the multiple target devices 71 correspond to multiple users. At least two of the multiple users may be configured to communicate with one another. For example, the communication corresponds to a side link. One of the multiple target devices 71 may be configured to communicate with the core network 60. One of the multiple target devices 71 may be configured to communicate with another device connected to the core network 60. For example, such communication corresponds to an uplink. The core network 60 may be configured to communicate with at least one of the multiple users. For example, such communication corresponds to a downlink. The embodiment is applicable to the various communications described above.

The multiple target devices 71 each are terminals. For example, the following processing may be performed in the communication (the uplink) between the core network 60 and the terminal. For example, the terminal notifies a data allocation request to the base station 72. The base station 72 performs resource allocation of the uplink via the controller 73 by a procedure similar to a downlink transmission. The base station 72 notifies the terminal to transmit using the resource designated for the uplink.

At least two of the multiple terminals may perform the side links described above among the resources allocated by the base station 72.

An example of a calculation result will now be described.

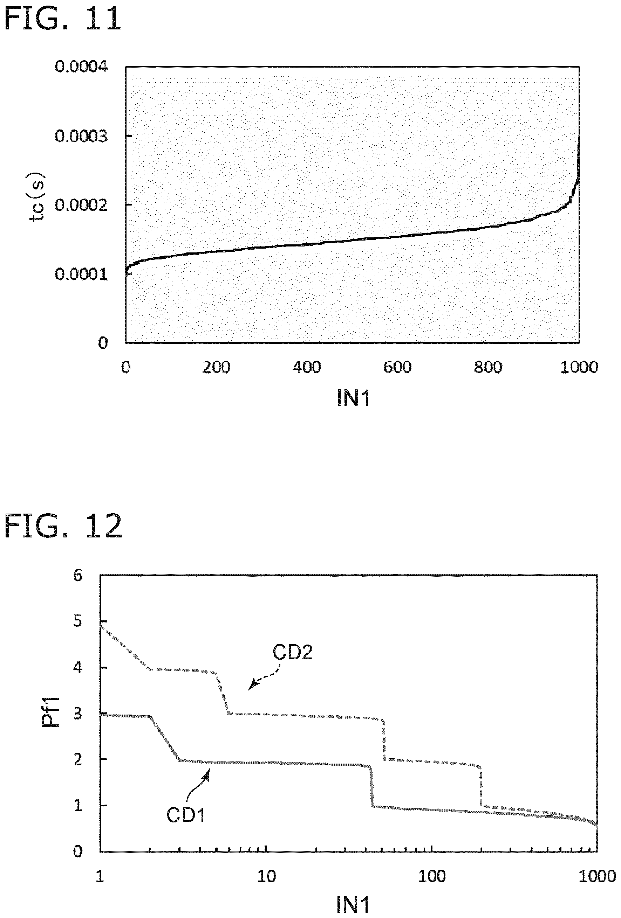

FIG. 11 is a graph illustrating the calculation result of the information processing device according to the first embodiment.

In FIG. 11, the horizontal axis is an instance number *IN1*. The vertical axis is a calculation time tc. In the example, the number of multiple users was 20. The number of instances was 1000. In the example of FIG. 11, the calculation (the information processing) described with reference to the first embodiment was performed by two CPUs. The two CPUs each included eighteen computing cores. As shown in FIG. 11, the average calculation time tc was about 0.15 ms. The maximum calculation time tc was about 0.3 ms. Thus, according to the embodiment, the required performance of a calculation time tc of less than 0.5 ms was obtained.

FIG. 12 is a graph illustrating calculation results of the information processing device.

FIG. 12 illustrates the calculation results of a first technique CD1 and a second technique CD2. In the first technique CD1, the first and second processing described with reference to the first embodiment were performed. In the second technique CD2, the user order was randomly determined, and the communication blocks to be used by each of the multiple users were determined in order to minimize the number of communication blocks to be used. The communication blocks to be used were determined by the channels to be used, the transmission start time, and the transmission end time. For example, first, the communication blocks to be used by one of the multiple users was determined to minimize the number of communication blocks. Then, the communication blocks to be used by another one of the multiple users was determined from among the remaining communication blocks to minimize the number of communication blocks. This procedure was performed in order for all of the multiple users. The determination by such a procedure of the communication blocks to be used was performed as one unit. The determination of the communication blocks to be used by the multiple users was repeated for twenty units; and the case where the area was lowest was selected.

In FIG. 12, the horizontal axis is the instance number *IN1*. The vertical axis is a performance parameter *Pf1*. The performance parameter *Pf1* corresponds to the objective function representing the accuracy of the solution. The instance numbers IN1 are sorted in descending order of the performance parameter *Pf1* for the first and second techniques CD1 and CD2. The accuracy of the solution increased as the performance parameter *Pf1* decreased. In the first technique CD1 as shown in FIG. 12, compared to the second technique CD2, a small performance parameter *Pf1* was obtained, and a highly accurate solution was obtained.

Embodiments may include the following configurations (e.g., technological proposals).

Configuration 1

An information processing device, comprising:

an acquisition part; and
a processor,
the acquisition part being configured to acquire input information related to a plurality of target devices,
the processor being configured to perform first processing and second processing,
in the first processing, the processor deriving a first solution of a problem determined according to the input information,
in the second processing, the processor deriving output information by using

the first solution, and
a plurality of scores calculated from the first solution and second information.

Configuration 2

The information processing device according to Configuration 1, wherein
the problem is an optimization problem determined according to the input information.

Configuration 3

The information processing device according to Configuration 1 or 2, further comprising:

storage,
the storage storing the second information,
the processor being configured to acquire the second information from the storage and perform the second processing.

Configuration 4

The information processing device according to any one of Configurations 1 to 3, wherein

the processor is configured to repeatedly perform, in the first processing:

a first variable update of updating a first variable set; and
a second variable update of updating a second variable set,

the input information includes a problem parameter set,
in the second variable update, the processor updates the second variable set by using a function including the problem parameter set and the first variable set, and
in the first variable update, the processor updates the first variable set by using the second variable set updated in the second variable update.

Configuration 5

The information processing device according to Configuration 4, wherein
the processor is configured to update a part of the second variable set and update an other part of the second variable set in parallel in the second variable update.

Configuration 6

The information processing device according to Configuration 4, wherein

the processor includes a first processing part and a second processing part,

the first processing part is configured to update a part of the second variable set in the second variable update, and
the second processing part is configured to update an other part of the second variable set in the second variable update.

Configuration 7

The information processing device according to any one of Configurations 1 to 6, wherein

the plurality of target devices is a plurality of communication devices,
the input information includes a plurality of transmission information amounts and a plurality of transmission efficiencies,
one of the plurality of transmission information amounts includes an information amount of a transmission of one of the plurality of communication devices, and
one of the plurality of transmission efficiencies corresponds to a transmission quality of a frequency channel utilized by the one of the plurality of communication devices.

Configuration 8

The information processing device according to Configuration 7, wherein
the output information includes:

the frequency channels to be used in the transmissions of the plurality of communication devices; and
transmission times of the plurality of communication devices.

Configuration 9

The information processing device according to Configuration 7, wherein
the first solution does not include transmission times of the plurality of communication devices.

Configuration 10

The information processing device according to any one of Configurations 7 to 9, wherein
the processor is configured to determine start times of the transmissions of the plurality of communication devices in the second processing.

Configuration 11

The information processing device according to any one of Configurations 7 to 10, wherein
the transmission includes a wireless transmission.

Configuration 12

The information processing device according to any one of Configurations 1 to 11, wherein
the second information includes statistical information previously obtained for the plurality of scores.

Configuration 13

The information processing device according to any one of Configurations 1 to 12, wherein
the second information includes a relationship between the plurality of scores and a performance of the plurality of target devices.

Configuration 14

The information processing device according to any one of Configurations 1 to 13, wherein

the problem does not include a first condition, and
the second information includes information related to the first condition.

Configuration 15

The information processing device according to any one of Configurations 1 to 14, further comprising:

a transmitter,
the transmitter being configured to output the output information.

Configuration 16

A communication system, comprising:

a controller; and
a base station,
the controller including the information processing device according to any one of Configurations 1 to 15.

Configuration 17

The communication system according to Configuration 16, wherein

the base station is configured to acquire the input information from at least a part of the plurality of target devices and supply the input information to the information processing device,
the controller is configured to receive an allocation request from the base station,
the information processing device is configured to determine a resource used in communications of the plurality of target devices,
the controller is configured to transmit the resource to the base station, and
the base station is configured to communicate with the plurality of target devices by using the resource.

Configuration 18

A communication system, comprising:

a base station,
the base station including the information processing device according to any one of Configurations 1 to 15.

According to embodiments, an information processing device and a communication system can be provided in which speedup is possible.
Hereinabove, exemplary embodiments of the invention are described with reference to specific examples. However, the embodiments of the invention are not limited to these specific examples. For example, one skilled in the art may similarly practice the invention by appropriately selecting specific configurations of components included in the information processing device such as processors, acquisition parts, etc., from known art. Such practice is included in the scope of the invention to the extent that similar effects thereto are obtained.
Further, any two or more components of the specific examples may be combined within the extent of technical feasibility and are included in the scope of the invention to the extent that the purport of the invention is included.
Moreover, all information processing devices practicable by an appropriate design modification by one skilled in the art based on the information processing devices described above as embodiments of the invention also are within the scope of the invention to the extent that the purport of the invention is included.
Various other variations and modifications can be conceived by those skilled in the art within the spirit of the invention, and it is understood that such variations and modifications are also encompassed within the scope of the invention.
While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

**Claims**

1. An information processing device, comprising:

   an acquisition part; and
   a processor,
   the acquisition part being configured to acquire input information related to a plurality of target devices,
   the processor being configured to perform first processing and second processing,
   in the first processing, the processor deriving a first solution of a problem determined according to the input information,
   in the second processing, the processor deriving output information by using

   the first solution, and
   a plurality of scores calculated from the first solution and second information.

2. The device according to claim 1, wherein
   the problem is an optimization problem determined according to the input information.

3. The device according to claim 1 or 2, further comprising:

   storage,
   the storage storing the second information,
   the processor being configured to acquire the second information from the storage and perform the second processing.

4. The device according to any one of claims 1-3, wherein

   the processor is configured to repeatedly perform, in the first processing:

   a first variable update of updating a first variable set; and
   a second variable update of updating a second variable set,

   the input information includes a problem parameter set,
   in the second variable update, the processor updates the second variable set by using a function including the problem parameter set and the first variable set, and
   in the first variable update, the processor updates the first variable set by using the second variable set updated in the second variable update.

5. The device according to claim 4, wherein
   the processor is configured to update a part of the second variable set and update an other part of the second variable set in parallel in the second variable update.

6. The device according to claim 4, wherein

   the processor includes a first processing part and a second processing part,
   the first processing part is configured to update a part of the second variable set in the second variable update, and
   the second processing part is configured to update an other part of the second variable set in the second variable update.

7. The device according to any one of claims 1-6, wherein

   the plurality of target devices is a plurality of communication devices,
   the input information includes a plurality of transmission information amounts and a plurality of transmission efficiencies,
   one of the plurality of transmission information amounts includes an information amount of a transmission of one of the plurality of communication devices, and
   one of the plurality of transmission efficiencies corresponds to a transmission quality of a frequency channel utilized by the one of the plurality of communication devices.

8. The device according to claim 7, wherein
the output information includes:

> the frequency channels to be used in the transmissions of the plurality of communication devices; and
> transmission times of the plurality of communication devices.

9. The device according to any one of claims 1-8, wherein
the second information includes statistical information previously obtained for the plurality of scores.

10. The device according to any one of claims 1-9, wherein
the second information includes a relationship between the plurality of scores and a performance of the plurality of target devices.

11. The device according to any one of claims 1-10, wherein

> the problem does not include a first condition, and
> the second information includes information related to the first condition.

12. The device according to any one of claims 1-11, further comprising:

> a transmitter,
> the transmitter being configured to output the output information.

13. A communication system, comprising:

> a controller; and
> a base station,
> the controller including the information processing device according to any one of claims 1-12.

14. The system according to claim 13, wherein

> the base station is configured to acquire the input information from at least a part of the plurality of target devices and supply the input information to the information processing device,
> the controller is configured to receive an allocation request from the base station,
> the information processing device is configured to determine a resource used in communications of the plurality of target devices,
> the controller is configured to transmit the resource to the base station, and
> the base station is configured to communicate with the plurality of target devices by using the resource.

15. A communication system, comprising:

> a base station,
> the base station including the information processing device according to any one of claims 1-12.

# FIG. 1

ACQUIRE INPUT INFORMATION I1 — S105

**FIRST PROCESSING**

INITIAL SETTING — S111

FIRST VARIABLE UPDATE/SECOND VARIABLE UPDATE
DERIVE FIRST SOLUTION A1 — S112

— S110

79a

I2

**SECOND PROCESSING**

DERIVE SCORE S1 — S121

DERIVE OUTPUT INFORMATION I3 — S122

— S120

PROVIDE — S130

FIG. 2

# FIG. 3

S112

S112a

$$y_i \leftarrow y_i + dt * f(\{x\}, \{P\}, \{Q\})$$

SECOND VARIABLE UPDATE

S112b

FIRST VARIABLE UPDATE $\quad x_i \leftarrow x_i + dt * y_i$

S112d

nt=nt+1

YES

S112c

nt<Nt

NO

# FIG. 4

FIRST VARIABLE UPDATE $x_i \leftarrow x_i + dt * y_i$ (S112b)

SECOND VARIABLE UPDATE $y_i \leftarrow y_i + dt * f(\{x\}, \{P\}, \{Q\})$ (S112a)

nt=nt+1 (S112d)

nt<Nt (S112c) — YES / NO

S112

# FIG. 5

```
ACQUIRE INPUT INFORMATION I1        ~S105
```

**FIRST PROCESSING**

```
INITIAL SETTING                     ~S111

FIRST VARIABLE UPDATE/SECOND VARIABLE UPDATE

CONDITION CHECK:
INITIALIZE FIRST VARIABLE AND SECOND VARIABLE      ~S112
MODIFY UPDATE RULE


DERIVE FIRST SOLUTION A1
```
~S110

**79a**

**SECOND PROCESSING**

```
I2  →  DERIVE SCORE S1              ~S121

DERIVE OUTPUT INFORMATION I3        ~S122
```
~S120

```
PROVIDE                            ~S130
```

## FIG. 6

FIG. 7

# FIG. 8

FIG. 9

FIG. 10

## FIG. 11

## FIG. 12

## EUROPEAN SEARCH REPORT

**Application Number**

EP 24 15 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 456 086 A1 (NTT DOCOMO INC [JP]) 23 May 2012 (2012-05-23) | 1-6,9-15 | INV. H04W24/02 |
| Y | * paragraph [0011] - paragraph [0016] * * paragraph [0026] - paragraph [0031] * * figure 1 * | 7,8 | |
| Y | EP 2 632 223 A1 (NTT DOCOMO INC [JP]) 28 August 2013 (2013-08-28) * paragraph [0037] - paragraph [0039] * * figures 1,2 * | 7,8 | |
| A | CN 114 501 504 A (LIMITED COMPANY OF STATE GRID ELECTRIC POWER SCIENCE RES INSTITUTE ET) 13 May 2022 (2022-05-13) * paragraph [0004] - paragraph [0032] * | 1-15 | |
| A | US 2017/347340 A1 (HALEY DAVID VICTOR LAWRIE [AU] ET AL) 30 November 2017 (2017-11-30) * paragraph [0107] - paragraph [0118] * | 1-15 | |

**TECHNICAL FIELDS SEARCHED (IPC)**

H04W

The present search report has been drawn up for all claims

| Place of search | Date of completion of the search | Examiner |
|---|---|---|
| Munich | 23 July 2024 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7015

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | | Publication date | Patent family member(s) | | Publication date |
|---|---|---|---|---|---|
| EP 2456086 | A1 | 23-05-2012 | BR | PI1105581 A2 | 15-04-2014 |
| | | | CN | 102469597 A | 23-05-2012 |
| | | | EP | 2456086 A1 | 23-05-2012 |
| | | | JP | 5351241 B2 | 27-11-2013 |
| | | | JP | 2012134952 A | 12-07-2012 |
| | | | KR | 20120089416 A | 10-08-2012 |
| | | | RU | 2483450 C1 | 27-05-2013 |
| | | | US | 2012122505 A1 | 17-05-2012 |
| EP 2632223 | A1 | 28-08-2013 | CN | 103298131 A | 11-09-2013 |
| | | | EP | 2632223 A1 | 28-08-2013 |
| | | | JP | 5459645 B2 | 02-04-2014 |
| | | | JP | 2013176043 A | 05-09-2013 |
| | | | US | 2013225220 A1 | 29-08-2013 |
| CN 114501504 | A | 13-05-2022 | NONE | | |
| US 2017347340 | A1 | 30-11-2017 | AU | 2015362066 A1 | 27-07-2017 |
| | | | CA | 2969344 A1 | 16-06-2016 |
| | | | EP | 3231236 A1 | 18-10-2017 |
| | | | JP | 6784675 B2 | 11-11-2020 |
| | | | JP | 2018506876 A | 08-03-2018 |
| | | | US | 2017347340 A1 | 30-11-2017 |
| | | | WO | 2016090411 A1 | 16-06-2016 |

EPO FORM P0459

For more details about this annex : see Official Journal of the European Patent Office, No. 12/82